# EUROPÄISCHE PATENTSCHRIFT

(11) **EP 3 662 760 B1**
(45) Veröffentlichungstag und Bekanntmachung des Hinweises auf die Patenterteilung: **25.06.2025**
(21) Anmeldenummer: 19401050.0
(22) Anmeldetag: 04.12.2019
(51) Int. Cl.: A23K 10/16, A23K 10/20, A23K 20/174, A23K 20/179, A23K 40/00, A23K 50/80

(54) **VERFAHREN ZUR HERSTELLUNG EINES MIT WENIGSTENS EINEM CAROTINOID ANGEREICHERTEN FUTTERMITTELS ODER EINER MIT WENIGSTENS EINEM CAROTINOID ANGEREICHERTEN FUTTERMITTELKOMPONENTE**
METHOD FOR PRODUCING A FEED ENRICHED WITH AT LEAST ONE CAROTENOID OR A FEED COMPONENT ENRICHED WITH AT LEAST ONE CAROTENOID
PROCÉDÉ DE FABRICATION D'UNE ALIMENTATION ENRICHIE EN AU MOINS UN CAROTINOÏDE OU D'UN COMPOSANT D'ALIMENTATION ENRICHI D'AU MOINS UN CAROTINOÏDE

(30) Priorität: 07.12.2018 DE 102018009529
(43) Veröffentlichungstag der Anmeldung: 10.06.2020
(73) Patentinhaber: Katz Biotech AG, 15837 Baruth/Mark (DE)
(72) Erfinder: Rademacher, Jörg, 12277 Berlin (DE); Krüger, Klaus, 06120 Halle (Saale) (DE); Wernecke, Henri, 01309 Dresden (DE); Ehrhardt, Enrico, 06120 Halle (Saale) (DE); Reda, Vincent, 04229 Leipzig (DE); Leifheit, Matthias, 06179 Teutschenthal (DE); Yakti, Wael, 12247 Berlin (DE)
(74) Vertreter: Sacht-Gorny, Gudrun

(56) Entgegenhaltungen:
- DE-U1- 202019 001 707
- NINA S. LILAND ET AL: "Modulation of nutrient composition of black soldier fly (Hermetia illucens) larvae by feeding seaweed-enriched media", PLOS ONE, vol. 12, no. 8, 24 August 2017 (2017-08-24), pages e0183188, XP055685994, DOI: 10.1371/journal.pone.0183188
- MATTHEW B. DUGAS ET AL: "Carotenoid supplementation enhances reproductive success in captive strawberry poison frogs ( Oophaga pumilio ) : Carotenoids Enhance Poison Frog Reproduction", ZOO BIOLOGY, vol. 32, no. 6, 1 November 2013 (2013-11-01), US, pages 655 - 658, XP055685970, ISSN: 0733-3188, DOI: 10.1002/zoo.21102
- JIEQIONG HUANGFU ET AL: "Antiaging Effects of Astaxanthin-Rich Alga Haematococcus pluvialis on Fruit Flies under Oxidative Stress", JOURNAL OF AGRICULTURAL AND FOOD CHEMISTRY, vol. 61, no. 32, 14 August 2013 (2013-08-14), US, pages 7800 - 7804, XP055686180, ISSN: 0021-8561, DOI: 10.1021/jf402224w
- E.R. LOCK ET AL: "Insect larvae meal as an alternative source of nutrients in the diet of Atlantic salmon ( Salmo salar ) postsmolt", AQUACULTURE NUTRITION, vol. 22, no. 6, 1 December 2016 (2016-12-01), GB, pages 1202 - 1213, XP055685936, ISSN: 1353-5773, DOI: 10.1111/anu.12343
- S. MANCINI ET AL: "Impact of black soldier fly larvae meal on the chemical and nutritional characteristics of rainbow trout fillets", ANIMAL, vol. 12, no. 8, 28 December 2017 (2017-12-28), GB, pages 1672 - 1681, XP055685931, ISSN: 1751-7311, DOI: 10.1017/S1751731117003421
- KENG CHIN LIM ET AL: "Astaxanthin as feed supplement in aquatic animals", REVIEWS IN AQUACULTURE, vol. 10, no. 3, 1 August 2018 (2018-08-01), pages 738 - 773, XP055685924, ISSN: 1753-5123, DOI: 10.1111/raq.12200

## Beschreibung

Die vorliegende Erfindung betrifft ein Verfahren zur Herstellung eines mit Astaxanthin angereicherten Futtermittels oder einer Futtermittelkomponente sowie ein solches angereichertes Futtermittel oder eine solche Futtermittelkomponente.

Bei der Erzeugung von tierischen Lebensmitteln ist das für die Nutztiere verwendete Futtermittel ein wichtiger Faktor. Beispielsweise sollte das Futtermittel bei einer Lachszucht in Aquakulturen das Carotinoid Astaxanthin enthalten, das die typische rötliche Färbung des Fischfleisches hervorruft und das als natürliches Antioxidans vielfältige positive Wirkungen hat, die mit für die Qualität des produzierten Lebensmittels verantwortlich sind. Unter natürlichen Lebensbedingungen nehmen Lachse Astaxanthin üblicherweise über Kleinkrebse auf. Die Kleinkrebse wiederum ernähren sich von Mikroalgen, die das Astaxanthin natürlicherweise bilden. Diese Nahrungskette besteht in Aquakulturen nicht. Daher wird in Aquakulturen Astaxanthin dem Futtermittel, welches den Proteinbedarf für die Lachse im Wesentlichen durch Fischmehl deckt, zugesetzt. Das hierfür verwendete Astaxanthin wird üblicherweise künstlich aus Erdöl synthetisiert. Allerdings darf dieses künstliche Astaxanthin nicht in ökologisch betriebenen Aquakulturanlagen eingesetzt werden. Weiterhin ist die ernährungsphysiologische Zusammensetzung des künstlichen Astaxanthins verhältnismäßig ungünstig. Darüber hinaus können bei dem künstlich hergestellten Astaxanthin toxische Begleitstoffe und/oder unerwünschte Stereoisomere auftreten, die für die Nahrungsmittelproduktion potenziell eine Gefahr darstellen.

Eine Alternative zu synthetisch hergestelltem Astaxanthin stellt natürliches Astaxanthin dar, welches technisch beispielsweise aus kultivierten Mikroalgen gewonnen werden kann. Als Astaxanthinquelle kann beispielsweise auch Krillmehl, welches im Wesentlichen aus Wildfängen stammt, verwendet werden, wobei dies mit einem Verbrauch von nur begrenzt verfügbaren, natürlichen Ressourcen verbunden ist. Für eine wirtschaftliche, großtechnische Erzeugung von Astaxanthin aus kultivierten Mikroalgen ist eine optimierte Prozessführung erforderlich. Die Aufarbeitung der Mikroalgen bis zur Extraktion bzw. Aufreinigung des Astaxanthins ist mit hohen Kosten verbunden. Insgesamt ist daher die Herstellung eines Futtermittels für die Produktion tierischer Lebensmittel, welches mit einem Wertstoff wie beispielsweise Astaxanthin angereichert ist, sehr aufwendig und mit hohen Kosten verbunden, insbesondere wenn als Wertstoff kein synthetischer, sondern ein natürlich produzierter Wertstoff eingesetzt werden soll.

Der Artikel von Liland et al. (2017) "Modulation of nutrient composition of black soldier fly (Hermetia illucens) larvae by feeding seaweed-enriched media" (PLoS One 12(8): e0183188) befasst sich mit Larven der Schwarzen Soldatenfliege, die eine vielversprechende Quelle für Proteine und Lipide in der Fütterung von Tieren darstellen. Die Autoren beschreiben die Verwendung der Braunalge *Ascophyllum nodosum* in dem Substrat für die Larven.

Der Artikel von Dugas at al. (2013) "Carotenoid Supplementation Enhances Reproductive Success in Captive Strawberry Poison Frogs (Oophaga Pumilio)" (Zoo Biology 32(6): 655-658) offenbart ein mit Carotinoiden angereichertes Medium für Fruchtfliegen. Die adulten Fruchtfliegen werden an Erdbeerfrösche verfüttert und die Auswirkungen auf die Reproduktion der Erdbeerfrösche wird beobachtet.

Der Artikel von Huangfu et al. (2013) "Antiaging Effects of Astaxanthin-Rich Alga Haematococcus pluvialis on Fruit Flies under Oxidative Stress" (J. Agric. Food Chem. 2013, 61: 7800-7804) beschreibt Antialterungs-Effekte bei Fruchtfliegen unter oxidativem Stress, wobei die Fruchtfliegen mit einem Substrat gezüchtet werden, das mit Biomasse aus der Astaxanthin-reichen Alge *Haematococcus pluvialis* angereichert ist.

Die Erfindung stellt sich demgegenüber die Aufgabe, ein verbessertes Verfahren zur Herstellung eines mit Astaxanthin angereicherten Futtermittels bereitzustellen, das die genannten Nachteile vermeidet und in ökonomischer Weise die Bereitstellung eines Futtermittels erlaubt, das mit Astaxanthin angereichert ist.

Diese Aufgabe wird durch ein Verfahren zur Herstellung eines mit Astaxanthin angereicherten Futtermittels oder einer mit Astaxanthin angereicherten Futtermittelkomponente gelöst, wie es Gegenstand des Anspruchs 1 ist. Bevorzugte Ausgestaltungen dieses Verfahrens ergeben sich aus den abhängigen Ansprüchen. Weiterhin wird die Aufgabe durch ein mit Astaxanthin angereichertes Futtermittel oder eine mit Astaxanthin angereicherte Futtermittelkomponente gelöst, wie es Gegenstand des nebengeordneten Anspruchs ist.

Bei dem vorgeschlagenen Verfahren wird zunächst eine Kultivierung von Mikroorganismen zur Bereitstellung einer Mikroorganismen-Biomasse vorgenommen, wobei die Mikroorganismen wenigstens einen Wertstoff, und zwar Astaxanthin produzieren und/oder anreichern. Kernpunkt des Verfahrens ist, dass diese Mikroorganismen-Biomasse an Insektenlarven verfüttert wird. Bei den Insektenlarven handelt es sich um Larven der Gattung *Hermetia.* Diese dabei den Wertstoff einlagernden Insektenlarven werden kultiviert. Schließlich werden diese Insektenlarven zu einem Futtermittel oder einer Futtermittelkomponente verarbeitet. Wenn im Folgenden von einem Wertstoff die Rede ist, ist damit im Allgemeinen Astaxanthin gemeint. Mit diesem Verfahren wird zunächst der Wertstoff in den Mikroorganismen ökonomisch produziert. Dieser Wertstoff wird zusammen mit den Mikroorganismen an die Insektenlarven verfüttert. Die Insektenlarven nehmen die Mikroorganismen auf, sodass der Aufschluss der Mikroorganismen in der Regel durch die Insektenlarven selbst erfolgt und nicht in aufwendiger Weise durch technische Prozesse vorgenommen werden muss. Weiterhin ist davon auszugehen, dass eine Anreicherung des Wertstoffes innerhalb der Insektenlarven erfolgt, da in den Insektenlarven keine oder kaum eine Verstoffwechselung des Wertstoffes zu erwarten ist. Die Insektenlarven fungieren dabei gewissermaßen als natürlicher Bioreaktor und wirken dabei zugleich als hochwertiger Proteinlieferant bei ihrer anschließenden Verarbeitung zu einem Futtermittel. Durch die vorgeschlagene Kombination von Mikroorganismen-Biotechnologie und Insekten-Biotechnologie ist es somit möglich, ein wertstoffangereichertes Futtermittel herzustellen, das in besonders vorteilhafter Weise für die Produktion tierischer Lebensmittel geeignet ist. Das vorgeschlagene Verfahren verzichtet dabei auf eine synthetische Herstellung des Wertstoffes, sodass die oben geschilderten Nachteile von synthetisch hergestellten Wertstoffen vermieden werden. Bei dem Verfahren wird ausgenutzt, dass viele Mikroorganismen die natürliche Tendenz aufweisen, Wertstoffe aus der Nahrung über das Verdauungssystem zu extrahieren und beispielsweise als Energiespeicher und/oder als Reservestoffe anzureichern. Gleichzeitig ist es durch den Einsatz einer der Natur gewissermaßen nachempfundenen Nahrungskette möglich, auf technisch aufwendige und kostenintensive Prozesse zum Zellaufschluss und zur Aufreinigung des Wertstoffes zu verzichten.

Bei dem Futtermittel bzw. der Futtermittelkomponente handelt es sich in bevorzugter Weise um ein Futtermittel bzw. um eine Futtermittelkomponente für Tiere. Es ist aber prinzipiell durchaus auch möglich, dass das Futtermittel oder die Futtermittelkomponente für die menschliche Ernährung vorgesehen ist, sodass das Verfahren auch zur Herstellung eines wertstoffangereicherten Nahrungsmittels bzw. einer Nahrungsmittelkomponente für Menschen genutzt werden kann.

In einer bevorzugten Ausgestaltung des Verfahrens erfolgt die Bereitstellung der Mikroorganismen-Biomasse für die Verfütterung an die Insektenlarven ohne einen Zellaufschluss der Mikroorganismen, insbesondere ohne einen technischen Zellaufschluss der Mikroorganismen. Die kultivierten Mikroorganismen können also nach der Ernte direkt an die Insektenlarven verfüttert werden. Oftmals sind die Insektenlarven in der Lage, ohne vorherigen Zellaufschluss die Mikroorganismen aufzunehmen und zu verdauen, sodass der eigentliche Zellausschluss innerhalb der Insektenlarven erfolgt.

Je nach Anwendung kann es unter Umständen besonders vorteilhaft sein, eine weitere Aufbereitung der Mikroorganismen-Biomasse vorzunehmen, bevor die Mikroorganismen-Biomasse an die Insektenlarven verfüttert wird, da der Fall auftreten kann, dass die Insektenlarven unter Umständen nur eingeschränkt in der Lage sind, die Zellwand der Mikroorganismen vollständig aufzuschließen. Es ist daher besonders bevorzugt, dass für die Bereitstellung der Mikroorganismen-Biomasse ein teilweiser oder vollständiger technischer Zellaufschluss der Mikroorganismen erfolgt, bevor die Mikroorganismen-Biomasse an die Insektenlarven verfüttert wird. Unter einem technischen Zellaufschluss ist hierbei zu verstehen, dass verfahrenstechnische Schritte vorgenommen werden, um den Zellaufschluss zu bewirken. Ein solcher technischer Zellaufschluss ist mit einfachen Methoden möglich und kann gegebenenfalls in der weiterführenden Wertschöpfungskette eine besonders effiziente Einlagerung des Wertstoffs in die Insektenlarven befördern. Hierbei ist es besonders bevorzugt, nur einen teilweisen Zellaufschluss durchzuführen oder lediglich eine Schwächung der Zellwandstrukturen vorzunehmen. Dies ist zum Einen im Hinblick auf die Verfahrenstechnik energetisch besonders vorteilhaft. Zum Anderen wird bei einem teilweisen Zellaufschluss oder bei einer lediglich geschwächten Zellwandstruktur weiterhin die Schutzfunktion der Zellstruktur für den Wertstoff während des Prozesses zeitweise erhalten.

Geeignete Technologien zur schonenden Schwächung von Zellwandstrukturen oder zum teilweisen Zellaufschluss sind dem Fachmann bekannt. Geeignet ist beispielsweise Leistungsultraschall. Durch genau dosierten Ultraschall mit vorzugsweise kontrollierter Anpassung von spezifischem Leistungseintrag, Amplitude, Pulssequenz, Verweilzeit, Druck und/oder Temperatur können Zellsuspensionen beaufschlagt und die Zellwandstrukturen geschwächt werden, ohne die Zelle komplett zu desintegrieren. Das konnte z. B. damit gezeigt werden, dass Zellaggregate (Ketten) von Cyanobakterien der Spezies *Arthrospira platensis* vereinzelt wurden, ohne die Einzelzellen zu zerstören. Weiterhin geeignet ist beispielsweise Elektroporation. Durch verschiedene im elektrischen Feld erzeugte Effekte (z. B. beschleunigte Ladungsträger) können Zellwände reversibel oder irreversibel permeabilisiert werden. Weiterhin kann ein teilweiser Zellaufschluss oder eine Schwächung der Zellwand durch eine Temperaturbehandlung erfolgen. Insbesondere durch Gefrier/Tau-Schritte können Zellwände partiell geschädigt werden, ebenso durch kurzzeitige Erhitzung. Der Einsatz von Gefrier/Tau-Schritten ist insbesondere dann mit besonderem Vorteil einsetzbar, wenn eine Zwischenlagerung und/oder ein Transport für die Bereitstellung der Mikroorganismen-Biomasse zur Verfütterung an die Insektenlarven vorgesehen ist, wobei die Biomasse für den Transport eingefroren werden kann. Des Weiteren ist es möglich, durch wohl dosierten mechanischen Aufschluss oder durch Druckwechselverfahren die Zellwände zu schädigen, um den Aufschluss in den Insektenlarven zu unterstützen. Apparate hierfür sind beispielsweise Kugelmühlen, Schlagmühlen oder Hochdruckhomogenisatoren. Weitere Optionen sind chemische und biochemische Methoden, wie z. B. der Einsatz von Enzymen oder von anderen, insbesondere zersetzenden Mikroorganismen.

Je nach eingesetztem Mikroorganismus für das vorgeschlagene Verfahren und den jeweiligen Kultivierungsbedingungen kann der Fall eintreten, dass sich während der Kultivierung der Mikroorganismen Dauerstadien, im Fall von Algen z. B. sogenannte Zysten, ausbilden, die als widerstandsfähige Überdauerungsstadien eine besonders feste Zellwand aufweisen. Beispielsweise ereignen sich während der Carotinogenese von *Haematococcus pluvialis* verschiedene morphologische und physiologische Veränderungen der Zellen, welche neben der veränderten metabolischen Aktivität ebenfalls zur Ausbildung einer stabilen Zellwand führen. Die Zellen gehen somit von einem vegetativ-begeißelten Zellstadium in ein unbewegliches Zystenstadium über. Die Zysten stellen eine widerstandsfähige Überdauerungsform dar, welche den Organismus vor allem durch die Stabilität und die Heterogenität der gebildeten Zellwand optimal vor unterschiedlichen abiotischen Umwelteinflüssen schützen sollen. Da die festen Zellwandstrukturen einen Zellaufschluss und eine Verwertung der Mikroorganismen durch die Insektenlarven erschweren, kann es mit besonderem Vorteil vorgesehen sein, dass während der Kultivierung der Mikroorganismen die Dauerstadien der Mikroorganismen in sich vermehrende, also vegetative Stadien durch Änderung der Kultivierungsbedingungen überführt werden. Die Kultivierungsbedingungen, die diesen Übergang von den Überdauerungsstadien zu sich vermehrenden Stadien beeinflussen, sind beispielsweise veränderte Lichtbedingungen, veränderte Salinität und/oder veränderte Nährstoffsitutation (siehe auch Sun H. et al., Repeated cultivation: non-cell disruption extraction of astaxanthin for Haematococcus pluvialis. Sci. Rep. 6, 20578; doi: 10.1038/srep20578 (2016)), die je nach den konkreten Gegebenheiten bei dem vorgeschlagenen Verfahren eingesetzt werden können. Durch die Beeinflussung dieser Bedingungen kann während der Kultivierung der Mikroorganismen deren Zellwandstruktur geschwächt werden, sodass die Biomasse der Mikroorganismen im nachfolgenden Verfahrensschritt für die Insektenlarven besser zu verarbeiten ist.

In einer besonders bevorzugten Ausgestaltung des Verfahrens werden die Mikroorganismen vor einer Bereitstellung der Mikroorganismen-Biomasse konditioniert. Durch eine solche Konditionierung kann die Produktion und/oder Anreicherung des Wertstoffes innerhalb der Mikroorganismen angeregt oder verstärkt werden. Beispielsweise kann die Produktion bestimmter Wertstoffe in den Mikroorganismen durch bestimmte Lichtverhältnisse ausgelöst und/oder verstärkt werden. Ob eine solche Konditionierung für die jeweilige Anwendung sinnvoll ist, hängt von dem jeweiligen Mikroorganismus ab und erschließt sich dem Fachmann. Durch eine Konditionierung kann die Produktion des Wertstoffes durch die Mikroorganismen erheblich gesteigert werden. Die Konditionierung kann dabei im Rahmen einer Stressinduktion erfolgen, wobei insbesondere die Lichtverhältnisse und/oder die Temperaturbedingungen und/oder die Medienzusammensetzung (z. B. Nährstofflimitierung) und/oder Salinität (z. B. erhöhte Salinität) variiert werden kann. Die Konditionierung erfolgt dabei zweckmäßigerweise nach der eigentlichen Anzucht- bzw. Vermehrungsphase der Mikroorganismen.

Nach der Kultivierung und gegebenenfalls Konditionierung der Mikroorganismen und gegebenenfalls Überführung in vegetative Vermehrungsstadien werden die Mikroorganismen geerntet und gegebenenfalls weiter aufbereitet, um die Zellen teilweise oder vollständig aufzuschließen oder um die Zellwände zu schwächen, um insgesamt den Zellaufschluss und/oder die Verarbeitung innerhalb der Insektenlarven zu erleichtern. Für die Verfütterung der Mikroorganismen-Biomasse an die Insektenlarven kann es vorgesehen sein, dass die Mikroorganismen-Biomasse in ein übliches Futtersubstrat für die Insektenlarven eingemengt wird. Dies hat den besonderen Vorteil, dass durch das in dem üblichen Futtersubstrat in der Regel vorhandene Mikrobiom ein weiterer Zellaufschluss der Mikroorganismen erfolgen kann, sodass das Mikroorganismen-Material für die Insektenlarven noch besser zu verarbeiten ist.

Bei den Insektenlarven handelt es sich um Larven der Gattung *Hermetia,* insbesondere um Larven von *Hermetia illucens* (Schwarze Soldatenfliege). Larven von *Hermetia illucens* eignen sich in besonderer Weise für eine biotechnologische Produktion in größerem Maßstab, da sie unempfindlich und verhältnismäßig anspruchslos sind. Bereits jetzt werden Larven von *Hermetia illucens,* die sich von organischen Substanzen nahezu aller Art ernähren können, als Futtermittel in der Tierernährung eingesetzt. Larven von *Hermetia illucens* weisen hohe Proteingehalte und hohe Anteile essentieller Aminosäuren auf. Aufgrund ihrer besonderen Lebensweise sind sie enorme Futterverwerter. Larven von *Hermetia illucens* lassen sich in besonders vorteilhafter Weise mit verhältnismäßig wenig Aufwand und Futter massenvermehren. Zudem konnte bereits die Eignung von Larven dieser Art zur Fischfütterung gezeigt werden. Beispielsweise wurden bereits Untersuchungen bei Steinbutt (*Psetta maxima*) beschrieben, bei denen mindestens 33% des verwendeten Fischmehls im Fischfutter durch Protein von *Hermetia illucens* ersetzt wurden (Kroeckel, S. et al., Aquaculture, Volumes 364-365, Seiten 345-362, 2012). Versuche der Erfinder haben gezeigt, dass Larven von *Hermetia illucens* kultivierte Mikroorganismen aufnehmen und die darin enthaltenen Wertstoffe anreichern, sodass Larven von *Hermetia illucens* in besonderer Weise für das erfindungsgemäße Verfahren geeignet sind. Vorzugsweise erfolgt die Kultivierung der Insektenlarven in an sich bekannter Weise in einem Insektenbioreaktor, wobei es besonders vorteilhaft ist, wenn die Kultivierung der Insektenlarven unter kontrollierten und/oder gesteuerten Umgebungsbedingungen und unter kontrollierten und/oder gesteuerten Futterversorgungsbedingungen erfolgt. Vorzugsweise werden die Larven für die weitere Verarbeitung als Futtermittel verwendet, bevor sie das Verpuppungsstadium erreichen.

Erfindungsgemäß ist der Wertstoff Astaxanthin. Hierbei handelt es sich um ein Carotinoid. Der Begriff "Astaxanthin" umfasst hierbei nicht nur Astaxanthin in seiner Reinform, sondern auch Derivate von Astaxanthin, wie insbesondere die Esterformen des Astaxanthins (z.B. Mono- oder Diesterformen von Astaxanthin). Insbesondere die Mono- und Diesterformen können neben der nicht-veresterten Reinform natürlicherweise vorkommen und sind daher für die Zwecke der Erfindung ebenfalls gut geeignet. Es ist auch möglich, dass die Mikroorganismen beispielsweise durch rekombinante Methoden in die Lage versetzt werden, das Astaxanthin z. B. in seiner nicht-veresterten Reinform und/oder Derivate des Astaxathin zu produzieren und/oder anzureichern, sodass mit dem vorgeschlagenen Verfahren Futtermittel oder Futtermittelkomponenten herstellbar sind, die mit den entsprechenden Derivaten angereicht sind. Darüber hinaus ist es möglich, dass eine Derivatisierung des Astaxanthins während der Durchführung des Verfahrens erfolgt. Prinzipiell können auch andere Wertstoffe für die Produktion des Futtermittels oder der Futtermittelkomponente analog zu dem vorgeschlagenen Verfahren eingesetzt werden. Beispiele für andere Wertstoffe sind Phycoerythrin, Phycocyanin, andere Carotinoide und Pigmente, z. B. Fucoxanthin, Vitamine und Aminosäuren, insbesondere essentielle oder limitierende Aminosäuren. Je nach gewünschtem Wertstoff können dann entsprechende Mikroorganismen verwendet werden, die natürlicherweise den jeweiligen Wertstoff produzieren und/oder anreichern. Die folgende Auflistung zeigt einige ausgewählte Wertstoffe und entsprechende Mikroorganismen, insbesondere Mikroalgen und Cyanobakterien, die diese Wertstoffe synthetisieren und die analog zu dem vorgeschlagene Verfahren eingesetzt werden können:

| | |
|---|---|
| Phycoerythrin: | *Porphyridium purpureum, Porphyridium cruentum, Planktothrix rubescens* |
| | |
| Phycocyanin: | *Arthrospira platensis, Chlorella vulgaris, Aphanizomenon flos aquae* |
| | |
| Fucoxanthin: | *Phaeodactylum tricornutum, Chaetoceros gracilis, Odontella aurita* |
| | |
| Vitamin E, Vitamin C: | *Scenedesmus obiquus, Chlamydomonas reinhardtii, Chlorella vulgaris* |
| | |
| Aminosäuren MAA (*mycosporine like amino acids*): | *Aphanizomenon flos aquae, Aphanizomenon spiralis, Chlorella sorokiniana* |

In anderen Ausgestaltungen können auch beispielsweise gentechnisch veränderte Mikroorganismen eingesetzt werden, die beispielsweise durch rekombinante Methoden dazu in die Lage versetzt werden, den Wertstoff zu produzieren und/oder anzureichern.

In besonderer Weise eignen sich analog zu dem vorgeschlagenen Verfahren ungesättigte Fettsäuren als Wertstoff, insbesondere mehrfach ungesättigte Fettsäuren (PUFA - *poly unsaturated fatty acids*)*.* So könnten beispielsweise Omega-3-Fettsäuren als Wertstoff eingesetzt werden. Omega-3-Fettsäuren spielen in der menschlichen Ernährung eine große Rolle. Omega-3-Fettsäuren können beispielsweise über entsprechend angereicherte Eier für die menschliche Ernährung zur Verfügung gestellt werden. Das vorgeschlagene Verfahren eignet sich daher prinzipiell in analoger Weise zur Herstellung eines Futtermittels oder einer Futtermittelkomponente für Geflügel, wobei diese Futtermittel bzw. die Komponente mit Omega-3-Fettsäuren als Wertstoff angereichert ist. Die von diesem Geflügel gelegten Eier enthalten besonders hohe Anteile an Omega-3-Fettsäuren und eignen sich daher in besonderer Weise für den menschlichen Verzehr. Als Mikroorganismen für dieses Verfahren können beispielsweise *Chlamydomonas variabilis, Chlorella vulgaris* oder *Nannochloropsis salina* eingesetzt werden, wobei die bereitgestellte Mikroorganismen-Biomasse in der oben beschrieben Weise beispielsweise an *Hermetia-Larven* verfüttert wird. Die Larven werden anschließend zu einem geeigneten Futtermittel oder einer Futtermittelkomponente für Geflügel verarbeitet.

Unter dem Begriff "Mikroorganismen" werden mikroskopisch kleine Organismen verstanden, die mit bloßem Auge nicht sichtbar sind. Im Wesentlichen handelt es sich um einzellige oder wenigzellige Organismen. Vorteilhaft für das erfindungsgemäße Verfahren ist es, wenn sich die Mikroorganismen kultivieren lassen, beispielsweise in Bioreaktoren. Die Erfindung nutzt dabei die Eigenschaft vieler Mikroorganismen, bestimmte Stoffe produzieren oder anreichern zu können, die vom Menschen im Sinne eines Wertstoffs genutzt werden können. Allgemein werden unter dem Begriff "Wertstoff" dabei insbesondere solche Stoffe verstanden, die bei der Physiologie eine besondere Rolle spielen, insbesondere bei der Ernährung des Menschen und/oder bei der Kultivierung von Nutztieren. Als Wertstoffe können dabei beispielsweise solche Stoffe verstanden werden, die vom Organismus nicht selbst oder nur in zu geringem Maße synthetisiert werden und die daher mit der Nahrung aufgenommen werden müssen, z. B. bestimmte Vitamine, Antioxidantien oder ungesättigte Fettsäuren (essentielle Nahrungsbestandteile). Neben der ernährungsphysiologischen Bedeutung können die Wertstoffe aber auch eine gesundheitliche oder sonstige funktionelle Bedeutung für den Menschen und/oder für die zu kultivierenden Nutztiere besitzen. Beispielsweise besteht bei der Lachszucht in Aquakulturen der Hauptgrund für die Zugabe von Astaxanthin in der Erzielung der typischen Lachsfarbe. Lachsfleisch ohne diese Farbe wäre praktisch nicht vermarktbar, obwohl der eigentliche Nährwert im Prinzip identisch ist. Weiterhin bietet Astaxanthin den zusätzlichen Nutzen als hochwirksames Antioxidans, was allerdings für die Marktfähigkeit in der Regel nur eine untergeordnete Rolle spielt.

Bei den Mikroorganismen handelt es sich vorzugsweise um Algen, Pilze oder Bakterien, beispielsweise Cyanobakterien. Die Kultivierung der Mikroorganismen kann in an sich bekannter Weise beispielsweise in einem Photobioreaktor erfolgen. Beispielsweise können herkömmliche Rohr-Photobioreaktoren oder Platten-Photobioreaktoren verwendet werden. Insgesamt ist es vorteilhaft, wenn die Kultivierung der Mikroorganismen unter kontrollierten und/oder gesteuerten Kultivierungsbedingungen in speziell dafür ausgelegten Photobioreaktoren erfolgt.

In ganz besonders vorteilhafter Weise sind Mikroalgen für das vorgeschlagene Verfahren geeignet. Beispielsweise können Grünalgen, insbesondere Grünalgen der Gattung *Haematococcus,* vorzugsweise Grünalgen der Art *Haematococcus pluvialis* (Blutregenalge) eingesetzt werden. *Haematococcus pluvialis* ist herkömmlicherweise eine der wichtigsten natürlichen Quellen für die industrielle Gewinnung von Astaxanthin. Das Astaxanthin ist intrazellulär in den Zellen lokalisiert, wobei das Astaxanthin innerhalb der Zellen in sogenannten *Lipid bodies* akkumuliert wird. Die Algenzellen weisen in der Regel eine sehr stabile Zellwand auf. Bei der industriellen Gewinnung von Astaxanthin aus *Haematococcus pluvialis* stellt daher der Zellaufschluss und die Extraktion des Astaxanthins einen entscheidenden Kostenfaktor dar. Dieser aufwendige Zellaufschluss und die Extraktion des Astaxanthins wird bei dem erfindungsgemäßen Verfahren weitestgehend umgangen, indem die kultivierten Algenzellen selbst, gegebenenfalls mit einer gewissen Aufbereitung, an die Insektenlarven verfüttert werden, sodass die Algenzellen innerhalb der Insektenlarven durch deren Verdauungssystem aufgeschlossen werden. Beispielsweise können die Algen direkt, also frisch und ohne weitere Aufarbeitung und beispielsweise ohne Gefriertrocknung, an die Insektenlarven verfüttert werden, da dabei im Allgemeinen die Aufnahme und Anreicherung des Astaxanthin in den Larven bereits gut ist. Die Aufnahme und Einlagerung des Astaxanthin kann weiter verbessert werden, wenn die Algen vor der Verfütterung aufbereitet werden und beispielsweise ein teilweiser Zellaufschluss und/oder eine Schwächung der Zellwände durchgeführt wird. Dies kann durch einfache technische Maßnahmen, beispielsweise durch Ultraschallbehandlung oder Temperaturbehandlung (wie oben beschrieben), erzielt werden. Der technische Aufwand ist hierbei im Vergleich mit der industriellen Gewinnung von Astaxanthin aus Algen erheblich geringer.

In anderen bevorzugten Ausgestaltungen des Verfahrens können als Mikroorganismen beispielsweise Hefepilze eingesetzt werden, beispielsweise Hefen der Gattung *Phaffia,* vorzugsweise Hefen der Art *Phaffia rhodozyma.* Auch *Phaffia rhodozyma* ist in der Lage, Astaxanthin herzustellen bzw. anzureichern und eignet sich ähnlich wie *Haematococcus pluvialis* zur Herstellung eines Astaxanthin-angereicherten Futtermittels gemäß dem erfindungsgemäßen Verfahren. Gegebenenfalls kann es vorgesehen sein, gentechnisch veränderte Stämme von *Phaffia rhodozyma* einzusetzen, die gegenüber den natürlich vorkommenden Stämmen höhere Produktionsraten von Astaxanthin zeigen.

Das mit dem erfindungsgemäßen Verfahren herstellbare Futtermittel oder die herstellbare Futtermittelkomponente kann in bevorzugter Weise als Futtermittel oder Futtermittelkomponente für Fische und/oder für Geflügel vorgesehen sein. Je nach Zweckbestimmung des Futtermittels können entsprechende Anpassungen des Futtermittels, beispielsweise das Einstellen auf einen bestimmten Proteingehalt, Zugabe bestimmter Zusatzstoffe, Herstellung einer bestimmten Darreichungsform etc., vorgenommen werden. Das mit Astaxanthin angereicherte Futtermittel eignet sich in besonderer Weise als Fischfutter, insbesondere für in Aquakulturen gezüchtete Lachse, da das Astaxanthin die gewünschte rötliche Färbung des Fisches hervorruft und vorteilhafte ernährungsphysiologische Eigenschaften auch für den Menschen hat, der den gezüchteten Fisch verzehrt. Das erfindungsgemäß produzierte Futtermittel stellt dabei eine ökonomisch und auch ökologisch sehr vorteilhafte Alternative zu mit Astaxanthin angereichertem Fischmehl dar, das derzeit in großen Mengen für Aquakulturen eingesetzt wird. Fischmehl als ein herkömmlicher Hauptfutterbestandteil für Aquakulturen droht bereits heute die natürlichen Fischressourcen der Weltmeere zu überfordern. Mit dem erfindungsgemäßen Verfahren kann zum Einen die Proteinkomponente des Futtermittels durch die Kultivierung der Insektenlarven das Fischmehl zu einem erheblichen Teil ersetzen. Zum Anderen kann durch die Verfütterung von Astaxanthin-produzierenden Mikroorganismen an die Insektenlarven in sehr effizienter und nachhaltiger Weise ein geeignetes Futtermittel für Aquakulturen in ressourcenschonender Weise produziert werden. Insgesamt können damit die natürlichen Fischbestände durch den Einsatz des erfindungsgemäßen Verfahrens geschont werden. Ein technisch aufwendiger Aufschluss der Mikroorganismen, beispielsweise der Algen, eine Extraktion des Wertstoffes und dessen technische Anreicherung kann bei dem erfindungsgemäßen Verfahren entfallen. Gegebenenfalls kann ein vereinfachter Zellaufschluss erfolgen, beispielsweise durch Einfrieren/Auftauen oder anderes. Auf technisch aufwendige Methoden zum Zellaufschluss und zur Extraktion kann also verzichtet werden, da diese herkömmlicherweise technisch aufwendig zu realisierenden Schritte durch die Insektenlarven innerhalb einer naturnahen Nahrungskette vorgenommen werden. Bei der Verwendung eines solchen Futtermittels für die Aquakultur von Lachsen können die ernährungsphysiologischen Eigenschaften des Lachsfleisches verbessert werden, indem natürlich produziertes Astaxanthin und seine positiven Begleitstoffe eingelagert werden. Daraus ergibt sich eine neuartige und ökonomisch vorteilhafte Astaxanthinquelle auch für ökologisch betriebene Aquakulturen.

In bevorzugter Weise wird bei der weiteren Aufarbeitung der Insektenlarven zunächst eine Trocknung der Larvenbiomasse vorgenommen. Die Trocknung der Larvenbiomasse kann bis zu eine festlegbaren Restfeuchte vorgenommen werden. Es kann beispielsweise eine Restfeuchte bis zu 10 % oder bis zu 5 % vorgesehen sein. Vorzugsweise werden die Insektenlarven vor der Trocknung zunächst abgetötet. Der Trocknungsprozess kann beispielsweise durch Behandlung mit Heißluft bis zu der gewünschten Restfeuchte erfolgen. Die Trocknung der Larvenbiomasse hat den Vorteil, dass in der nachfolgenden Weiterverarbeitung im Prinzip mit Feststoffen gearbeitet werden kann (und nicht mit Flüssigkeiten oder Pasten).

Je nach Anwendungsfall kann es bei der Verarbeitung der Insektenlarven zu dem Futtermittel oder zu der Futtermittelkomponente vorteilhaft sein, die Fettfraktion von der Proteinfraktion abzutrennen oder gegebenenfalls keine Abtrennung der Fettfraktion von der Proteinfraktion vorzunehmen. Eine Abtrennung der Fettfraktion ist dann besonders zweckmäßig, wenn das Protein als trockenes Mehl gewonnen werden soll. Die Auftrennung in Fett- und Proteinfraktion hat im Allgemeinen darüber hinaus den Vorteil, dass sich damit Mischungsverhältnisse besonders exakt einstellen und natürlich bedingte Schwankungen im Nährstoffgehalt ausgeglichen werden können. So ist es z. B. möglich, ein standardisiertes und reproduzierbares Futtermittel beispielsweise in pelletierter Form herzustellen. Eine unterbleibende Abtrennung der Fettfraktion hat je nach betroffenem Wertstoff unter Umständen den Vorteil, dass sich der Wertstoff teilweise oder im Wesentlichen in der Fettfraktion der Insektenlarven ansammelt, und dass daher durch eine Abtrennung der Fettfraktion ein gewisser Anteil des Wertstoffs verloren gehen würde. Prinzipiell ist es auch möglich, nur die Fettfraktion für das Futtermittel einzusetzen, sofern keine Proteinquelle in dem Futtermittel gewünscht ist oder eine andere Proteinquelle zugesetzt werden soll. Auch kann eine unterbleibende Abtrennung der Fettfraktion vorteilhaft sein, wenn durch die erforderlichen prozessbedingten Parameter (z. B. Temperatur, Druck) eine Schädigung des Wertstoffes zu erwarten ist.

Bei der Verarbeitung der Insektenlarven zu einem Futtermittel ist es besonders bevorzugt, wenn die mit dem Wertstoff angereicherten Insektenlarven nur eine Komponente des Futtermittels darstellen. Die Insektenlarven werden also zunächst zu einer Futtermittelkomponente verarbeitet, die zusammen mit wenigstens einer weiteren Zutat zu dem letztendlichen Futter verarbeitet werden. Auf diese Weise kann das Futtermittel an verschiedene Zwecke optimal angepasst werden, beispielsweise indem noch weitere Nährstoffe und/oder Zusatzstoffe für die Herstellung des Futtermittels verwendet werden. Geeignete weitere Komponenten für ein anwendungsfertiges Futtermittel sind beispielsweise Weizen, Weizengluten, Erbsen, Pferdebohnen, Sojakuchen, Sojakonzentrat, Rapsmehl, Guarproteinmehl, Sonnenblumenkuchen, Blutmehl, Bierhefe, Krillmehl, hydrolisiertes Fischprotein, Fischöl, Rapsöl, Vitamine und Minerale wie z. B. Monocalciumphosphat. So kann das anwendungsfertige Futtermittel neben der erfindungsgemäßen, mit Astaxanthin angereicherten proteinreichen Komponente weiterhin beispielsweise Weizen, Fischöl, Weizengluten, Krillmehl, hydrolisiertes Fischprotein, Monocalciumphosphat und Bierhefe enthalten, wobei dieses Futtermittel insbesondere für Lachskulturen geeignet ist. Ein Lachsforellenfutter kann beispielsweise neben der erfindungsgemäßen Futtermittelkomponente Blutmehl, Sojakuchen, Rapsmehl, Sonnenblumenkuchen, Weizen, Fischöl, Rapsöl, Guarproteinmehl, Erbsen, Pferdebohnen, Sojakonzentrat, Vitamine und Minerale enthalten. Die Nährstoffgehalte für geeignete Futtermittel können beispielsweise 40 - 60 % Gesamtproteingehalt und 15 - 25 % Fettgehalt betragen. Daneben sind in unterschiedlichen Gewichtsanteilen Kohlenhydrate, Mineralstoffe und Vitamine enthalten sowie unverdauliche Bestandteile (Belaststoffe). Der Astaxanthin-Gehalt des fertigen Futtermittels beträgt vorzugsweise 50 - 100 mg/kg Futtermittel, vorzugsweise 70 - 80 mg/kg, insbesondere 75 mg/kg.

In besonders bevorzugter Weise ist für das Futtermittel eine Pelletierung vorgesehen. Diese Form des Futtermittels ist für vielfältige Anwendungen geeignet, beispielsweise für die Fischzucht oder die Geflügelzucht. In dieser Form kann das Futtermittel in einfacher Weise abgepackt, transportiert und für die Fütterung verwendet werden. Für eine Pelletierung ist es vorteilhaft, wenn der aus den Insektenlarven hergestellte Rohstoff trocken und gut lagerfähig ist. Es ist dabei vorteilhaft, die Insektenlarven mit möglichst geringem Prozessaufwand in das Futtermittel zu integrieren, um Wertstoffverluste, die beispielsweise bei einer Trocknung, Entfettung und/oder weiteren Aufreinigung auftreten können, zu vermeiden.

Die Erfindung umfasst schließlich ein mit Astaxanthin angereichertes Futtermittel oder eine mit Astaxanthin angereicherte Futtermittelkomponente, das bzw. die gemäß dem beschriebenen Verfahren herstellbar ist. In bevorzugten Ausgestaltungen zeichnet sich dieses Futtermittel bzw. die Futtermittelkomponente dadurch aus, dass der Proteingehalt des Futtermittels oder der Proteingehalt einer Komponente des Futtermittels auf der Basis von Insektenlarven bereitgestellt wird, wobei bereits die Insektenlarven aufgrund von deren Fütterung mit wertstoffproduzierenden und/oder -anreichernden Mikroorganismen gemäß dem erfindungsgemäßen Konzept mit Astaxanthin angereichert sind. Bei der Futtermittelkomponente kann es sich insbesondere um ein erfindungsgemäß hergestelltes Insektenmehl handeln. Weiterhin kann es sich bei der Futtermittelkomponente um eine Fettfraktion (Insektenfett) aus der Aufarbeitung der mit dem Wertstoff angereicherten Insekten handeln. Durch eine entsprechende Aufbereitung der Insektenlarven zeichnet sich das resultierende Futtermittel (oder eine Futtermittelkomponente) daher dadurch aus, dass das Futtermittel oder eine Komponente eines Futtermittels mit Astaxanthin angereichert ist. Derartige Futtermittel eignen sich in besonders bevorzugter Weise als Futtermittel in der Tierzucht oder in der Tierhaltung. In bevorzugter Weise beträgt der Astaxanthin-Gehalt des wertstoffangereicherten Futtermittels etwa 50 - 100 mg/kg Futtermittel, vorzugsweise 70 - 80 mg/kg, insbesondere 75 mg/kg.

In bevorzugten Ausgestaltungen kann das Futtermittel prinzipiell auf einer herkömmlichen Rezeptur für ein Futtermittel basieren, wobei insbesondere der Proteinanteil und/oder der Fettanteil der Rezeptur ganz oder teilweise durch das erfindungsgemäß herstellbare Insektenmehl und/oder die erfindungsgemäß herstellbare Fettfraktion (Insektenfett) ersetzt werden. In Abhängigkeit von dem konkreten Wertstoff-Gehalt der Insektenkomponente(n) können die Mengen der Insektenkomponenten je nach gewünschtem Wertstoffgehalt des fertigen Futtermittels entsprechend gewählt werden. Beispielsweise kann 5 - 50 %, insbesondere 10 - 25 %, vorzugsweise 19 - 20 % der Trockenmasse des Futtermittels von dem Insektenmehl gebildet werden. Weiterhin kann zusätzlich oder alternativ 5 - 10 %, insbesondere 7 %, der Trockenmasse des Futtermittels von dem Insektenfett gebildet werden.

Prinzipiell eignen sich die erfindungsgemäß herstellbaren Futtermittel auch als Nahrungsmittel oder als Nahrungsmittelkomponente für die menschliche Ernährung.

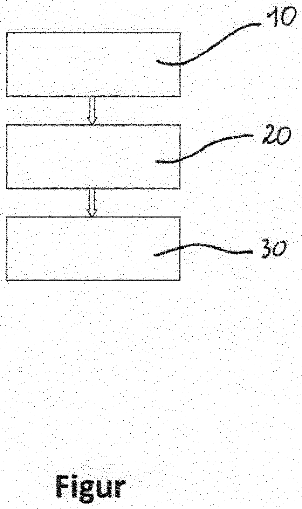

Weitere Merkmale und Vorteile der Erfindung ergeben sich aus der nachfolgenden Beschreibung von Ausführungsbeispielen in Verbindung mit der Zeichnung. Hierbei können die einzelnen Merkmale jeweils für sich oder in Kombination miteinander verwirklicht sein.

Die Figur illustriert in schematischer Weise das erfindungsgemäße Verfahren.

### Beschreibung von Ausführungsbeispielen

Das erfindungsgemäße Verfahren, das Mikroorganismen-Biotechnologie und Insekten-Biotechnologie miteinander kombiniert und das zur Herstellung eines mit Astaxanthin angereicherten Futtermittels oder einer mit Astaxanthin angereicherten Futtermittelkomponente vorgesehen ist, lässt sich in drei Hauptphasen gliedern:
a) Wertstoffinduktion - Mikroorganismen, die Astaxanthin produzieren und/oder anreichern, werden angezüchtet;
b) Wertstoffakkumulation - mit der im Wesentlichen unaufbereiteten Mikroorganismen-Biomasse werden Insektenlarven gefüttert, wobei Astaxanthin innerhalb der Insektenlarven eingelagert wird;
c) Wertstofftransfer - der Wertstoff wird zusammen mit den Insektenlarven als Proteinquelle im Wesentlichen verlustfrei in eine für ein Futtermittel geeignete Formulierung überführt.

Die **Figur** illustriert in schematischer Weise das erfindungsgemäße Verfahren. Im ersten Schritt 10 werden die Mikroorganismen, die Astaxanthin produzieren und/oder anreichern, zur Bereitstellung einer Mikroorganismen-Biomasse kultiviert. Dieser Schritt kann eine Konditionierung umfassen, bei der durch Einstellung entsprechender Bedingungen die Synthese oder Produktion des Wertstoffes angeregt wird. Nach einer Ernte und gegebenenfalls weiteren Aufbereitung der Mikroorganismen wird im Schritt 20 die Mikroorganismen-Biomasse an die Insektenlarven, also die Larven der Gattung *Hermetia,* verfüttert und die Insektenlarven werden kultiviert. Im Schritt 30 werden die Insektenlarven zu einem Futtermittel oder einer Futtermittelkomponente verarbeitet.

In einem besonders bevorzugten Ausführungsbeispiel werden für dieses Verfahren Mikroalgen, insbesondere Algen der Art *Haematococcus pluvialis* verwendet, die zur Produktion von Astaxanthin in der Lage sind. Als Insektenlarven werden Larven der Art *Hermetia illucens* eingesetzt. Das mit diesem Verfahren herstellbare wertstoffangereicherte Futtermittel ist in besonderer Weise als Fischfutter oder als Zusatz zu Fischfutter geeignet. In besonders bevorzugter Weise ist es für die Lachszucht in Aquakulturen einsetzbar.

Astaxanthin stellt aktuell das bedeutendste Hochwertprodukt dar, welches aus Mikroalgen gewonnen werden kann. Dennoch beträgt der globale Marktanteil des kommerziell eingesetzten, algenbasierten Astaxanthins weniger als 1 %. Den überwiegenden Marktanteil hält synthetisch aus petrochemischen Quellen synthetisiertes Astaxanthin. Synthetisches Astaxanthin enthält jedoch ein unnatürliches Verhältnis der Stereoisomere der Verbindung, was für Ernährungszwecke ungünstig ist und sich insbesondere bei biozertifizierten Lebensmitteln verbietet. Ungeachtet des zunehmenden Verbraucherinteresses an natürlichen Erzeugungsketten bei Lebensmitteln und ungeachtet der Nachteile synthetischen Astaxanthins kann der derzeitige Herstellungspreis für Algen-Astaxanthin nur schwer mit dem synthetischen Pendant konkurrieren. Bei einem herkömmlichen Algenzuchtprozess zur Produktion von Astaxanthin stellen vor allem die Ernte, der Zellaufschluss und die Produktextraktion enorme Kostenfaktoren dar. Ein entscheidender Kostenfaktor ist hierbei der mechanische Zellaufschluss und die Extraktion des Astaxanthins, die in der Regel durch überkritische CO₂-Extraktion realisiert wird. Die Extraktion erfolgt herkömmlicherweise an getrocknetem Biomaterial, sodass davor ein Trocknungsschritt, beispielsweise eine Sprühtrocknung, erfolgen muss. Dies sind alles sehr energieaufwendige Prozesse. Das erfindungsgemäße Verfahren hat demgegenüber den entscheidenden Vorteil, dass auf diese energieaufwendigen Verfahrensschritte teilweise oder vollständig verzichtet werden kann. In dem erfindungsgemäßen Verfahren nehmen die Insektenlarven, also die *Hermetia-Larven,* die Astaxanthin produzierenden Mikroalgen direkt auf. Im Rahmen der Verdauung der Hermetia-Larven findet im Wesentlichen ein natürlicher Zellaufschluss und eine Einlagerung des Astaxanthins statt. Dieser natürliche Zellaufschluss kann durch eine geeignete Aufbereitung der Algen unterstützt werden, wobei vor der Verfütterung der Algen-Biomasse an die Insektenlarven ein teilweiser oder gegebenenfalls auch vollständiger Zellaufschluss oder eine Schwächung der Zellwandstrukturen durch einfache technische Maßnahmen erfolgt. Im Ergebnis erfolgt ein vorteilhafter Wertstofftransfer aus Mikroalgen in das Futtermittel oder die Futtermittelkomponente. Mit diesem Verfahren lässt sich ein Futtermittel oder auch ein Nahrungsmittel herstellen, das mit hochwertigem, natürlich produziertem Astaxanthin angereichert ist und das deutlich geringere Erzeugungskosten als vergleichbare herkömmliche Verfahren mit sich bringt.

### Einlagerung von Astaxanthin in Hermetia-Larven

Für erste Versuche wurde ein käufliches Astaxanthin-Präparat verwendet, das aus Algen-Biomasse gewonnen wird und einen Astaxanthin-Gehalt von ca. 5 % aufweist (AstaReal^{®} A1010). Dieses Material wurde in Konzentrationen von 0,5 % (Gruppe A) und 0,25 % (Gruppe B) einem Basisfutter für die Aufzucht von *Hermetia-Larven* beigesetzt. Hierzu wurden mehrere Testreihen mit jeweils 500 Tieren durchgeführt. Kurz vor dem Eintritt in das Verpuppungsstadium wurden die Tiere gewaschen und durch Tiefkühlen abgetötet. Anschließend fand eine Analyse des Astaxanthins im Gewebe der Larven statt.

Für die Bestimmung der Astaxanthin-Konzentration in den *Hermetia-Larven* wurden diese im nativen Zustand mechanisch durch Mörsern zerkleinert. Das Astaxanthin wurde mit Aceton aus dem Material extrahiert. Anschließend erfolgte eine photometrische Bestimmung und Berechnung der Astaxanthin-Konzentration anhand bekannter Absorptionskoeffizienten. Die folgende Tabelle fasst die Analyseergebnisse zusammen:

| Versuchsgruppe | Algen-Biomasse im Basisfutter | Astaxanthin im Basisfutter | Astaxanthin im Larvenmaterial | Anreicherungs-Faktor |
|---|---|---|---|---|
| A | 0,56 % (5,6 mg/g Futter) | 0,028 % (0,28 mg/g Futter) | 4,96 % (49,6 mg/g Larve) | 177 |
| B | 0,25 % (2,8 mg/g Futter) | 0,014 % (0,14 mg/g Futter) | 2,71 % (27,1 mg/g Larve) | 194 |

Diese Ergebnisse zeigen eine signifikante Anreicherung des Wertstoffs Astaxanthin in den Larven sowie eine Korrelation zur Fütterungsmenge. Mikroskopische Beobachtungen von präparierten Larven zeigen eine deutliche Farbstoffeinlagerung in Gewebekompartimenten.

Insgesamt belegen diese Ergebnisse, dass eine Akkumulation bzw. Einlagerung des Wertstoffs Astaxanthin in der Larve erfolgt und Astaxanthin im Wesentlichen nicht verstoffwechselt wird.

### Abhängigkeit der Astaxanthin-Einlagerung von der Algen-Darreichungsform

Für weitere Versuche wurden verschiedene Darreichungsformen einer Algen-Biomasse (*Haematococcus pluvialis*) für die Fütterung von *Hermetia-Larven* untersucht (frisch und gefriergetrocknet). Insgesamt wurden ~ 56 mg Astaxanthin in Form von frischer bzw. gefriergetrockneter Algen-Biomasse (2,8 g Biomasse-Trockensubstanz) mit 410 g Larven-Basisfutter vermischt und für die Fütterung von 230 *Hermetia-Larven* verwendet. Die Larven wurden für 12 bis 15 Tage auf dem Medium kultiviert, bevor die Ernte erfolgte. Zum Zeitpunkt der Ernte hatten die Larven bereits zum Teil das Puppenstadium erreicht. Nach der Ernte wurden die Larven bzw. die Puppen durch Kälte abgetötet und für die weitere Analyse verwendet. Die verschiedenen Entwicklungsstadien wurden getrennt voneinander hinsichtlich der Astaxanthin-Konzentration untersucht. Hierzu wurden die Larven und die Puppen zunächst für 48 h gefriergetrocknet und anschließend mit Hilfe einer Kugelmühle zu einem homogenen Probengemisch verarbeitet. Aus den homogenisierten Proben wurden definierte Mengen abgewogen und anschließend ein mechanischer Zellaufschluss durchgeführt. Nach dem Zellaufschluss erfolgte die Extraktion des Astaxanthins aus den Proben mit Hilfe von Aceton. Die Bestimmung der Astaxanthin-Konzentration erfolgte mit Hilfe einer photometrischen Messung bei 420 nm.

Aus den Ergebnissen der Messung ging hervor, dass das Larvenstadium zum Zeitpunkt der Ernte einen erheblichen Einfluss auf die Astaxanthin-Konzentration innerhalb der Larven besitzt. Die Analysen zeigten, dass in den Puppen die Astaxanthin-Konzentration vergleichsweise geringer war als in den Larven. Die Konzentrationen variierten dabei im Bereich von 1 - 200 µg Astaxanthin pro Gramm Biotrockenmasse der Larven. Darüber hinaus konnten aus den Versuchen ebenfalls Rückschlüsse hinsichtlich der optimalen Darreichungsform der Algen-Biomasse gezogen werden. Aus den Versuchsergebnissen ging hervor, dass in den Larven, welche mit frischer Algen-Biomasse gefüttert worden waren, die Astaxanthin-Konzentration um den Faktor 2 -2,5 höher war als in jenen Larven, die mit gefriergetrockneter Algen-Biomasse gefüttert worden waren.

### Herstellung eines mit Astaxanthin angereicherten Futtermittels auf der Basis von Hermetia-Larven

Die Kultivierung der Grünalge *Haematococcus pluvialis* erfolgt in an sich bekannter Weise. Beispielsweise kann die Kultivierung in einem zweistufigen Prozess erfolgen. Zunächst erfolgt die Biomasseanzucht der Algen unter optimalen Wachstumsbedingungen in einem geeigneten Photobioreaktor. Licht und Nährstoffbedingungen entsprechen den Bedürfnissen der Algen. Bevorzugt erfolgt die Anzucht auf einem Mineralsalzmedium und Nitrat als N-Quelle bei einer Temperatur von 20 - 30 °C. Die Beleuchtung erfolgt vorzugsweise mit PAR-Licht (PAR - *Photosynthetically Active Radiation*) und Photonenflussdichten von 50 - 350 µmol/(m²s). Eine Begasung erfolgt mit einem CO₂ angereicherte Luft im Bereich von 0,1 - 2 % CO₂. Die Algenzellen sind in dieser Phase motil, wachsen und vermehren sich durch Zellteilung. Die Anzuchtphase erfolgt im Allgemeinen in einem Zeitraum von 5 - 15 Tagen. Ist die maximale Biomassekonzentration erreicht, werden die Algenzellen limitierenden und/oder inhibierenden Stressbedingungen (Konditionierung) ausgesetzt. Hierzu zählen vorzugsweise Lichtstress, Salinität und Nährstofflimitation. Die Algen induzieren dann die Astaxanthin-Biosynthese. Die Astaxanthinbildung wird vorzugsweise durch Bestrahlung mit starkem blauem Licht und Phtonenflussdichten von 300 - 1500 µmol/(m²s) unter Zugabe von Salz und Limitierung der Stickstoffquelle ausgelöst. Die hierdurch ausgelöste Carotinogenese dauert unter diesen Bedingungen zwischen 2 - 5 Tagen. Die Zellen bilden dabei Dauerformen (Zysten), die durch Trennung im Schwerefeld (Sedimentation, Zentrifugation) einfach geerntet werden können. Vorzugsweise kann die gewonnene Frischbiomasse direkt zur Verfütterung an die *Hermetia-Larven* eingesetzt werden, z. B. als 1 - 2 %ige wässrige Suspension. Alternativ kann die Algen-Biomasse durch Einfrieren, Gefriertrocknen oder Trocknen lagerfähig gemacht werden.

Die Anzucht der *Hermetia-Larven* erfolgt in einem üblichen Zuchtbehälter, wobei frisch geschlüpfte Junglarven von *Hermetia illucens* mit einem übliches Larvenfutter-Substrat, beispielsweise Schweinemastfutter, das mit Nahrungsquellen aus geeigneter Biomasse, wie zum Beispiel industriellen Reststoffströmen (Pflanzenreste, Lebensmittelreste, Fermentationsreste) ergänzt ist, versorgt werden. Für den Zuchtansatz wird die Futterzusammensetzung unter Zugabe von Trinkwasser bis zu einem Wassergehalt von ca. 70 % gemischt und in den Zuchtbehälter überführt. Anschließend werden die frisch geschlüpften L1-Larven (frisch geschlüpfte Junglarven) in einen Bioreaktor eingebracht. Die Kultivierung der Larven erfolgt in einem Temperaturbereich zwischen 28°C und 35 °C und kontinuierlicher Zu- und Abführung der Stoffwechselgase. Je nach Entwicklung und Wachstum der Larven erfolgt nach ein bis sieben Tagen die Hinzugabe der Algen-Biomasse, die den Wertstoff Astaxanthin enthält. Nach weiteren zwölf Tagen ist das letzte Larvenstadium erreicht. Die Larven werden durch Sieben und Windsichtung vom Restsubstrat getrennt und weiterverarbeitet.

Die mit dem Wertstoff angereicherten *Hermetia-Larven* werden im Ergebnis in eine trockene, pulverförmige und lagerfähige Formulierung überführt, die sich als Futtermittelkomponente in ein Futtermittel einarbeiten lässt. Diese Futtermittelkomponente zeichnet sich dabei einerseits durch den hohen Astaxanthin-Gehalt aus. Andererseits wird durch die Insektenlarven ein hoher Proteingehalt dieser Futtermittelkomponente bereitgestellt. Je nach Anwendungsfall können neben dieser Futtermittelkomponente, die gemäß dem erfindungsgemäßen Verfahren hergestellt wird, noch weitere Inhaltsstoffe für das anwendungsfertige Futtermittel zugesetzt werden, deren Zusammensetzungen an den jeweiligen Anwendungszweck in an sich bekannter Weise angepasst werden können, beispielsweise im weiteren Wert- und Nährstoffgehalt usw..

Eine mögliche Alternative zu *Haematococcus pluvialis* stellt die Hefe *Phaffia rhodozyma* dar, welche ebenfalls zur Produktion von Astaxanthin geeignet ist.

Für die Weiterverarbeitung der Insektenlarven erfolgt in einer bevorzugten Ausgestaltung des Verfahrens zunächst eine Trocknung der getöteten Insektenlarven insbesondere durch Heißluft, sodass den Larven das Wasser größtenteils entzogen wird. Die Trockeninsektenmasse kann anschließend in einer Ölpresse weiterbehandelt werden, wobei eine Ölabtrennung unter Druck- und Temperaturerhöhung stattfindet. Es entstehen dabei zwei Hauptprodukte, die jeweils vollständig als hochwertige Futtermittelzusätze verwendbar sind. Bei diesen Produkten handelt es sich auf der einen Seite um Insektenfett und auf der anderen Seite um einen Presskuchen aus den hydrophilen Bestandteilen der Insektenbiomasse. In beiden Produkten ist Astaxanthin enthalten, das über die Algen in die Insekten transferiert wurde. Freies Astaxanthin wird mit dem Insektenfett extrahiert. An Protein gebundene Formen finden sich im Presskuchen. Der Presskuchen besteht zu ca. 60 % aus Rohprotein und ist zu etwa 90 % verdaubar. Er liegt vollständig als Trockenprodukt vor, was sich vorteilhaft auf die Stabilität, Lagerfähigkeit und Weiterverarbeitung auswirkt. Zur Optimierung von Mischungsprozessen lässt sich der Presskuchen zu Insektenmehl vermahlen. Die beiden Produkte können jeweils als Futtermittelkomponente verwendet werden. Je nach Anforderungen können diese in unterschiedlichen Gewichtsanteilen zusammen mit weiteren Zutaten dem herzustellenden Futtermittel zugesetzt werden. So kann das Futtermittel standardisiert und reproduzierbar hergestellt werden.

Im Detail können für die Weiterverarbeitung der geernteten *Hermetia-Larven* die Larven zunächst getötet und dann bis zu einer maximalen Restfeuchte von 5 % getrocknet werden (24 Stunden bei warmer Luft von 80°C). Für eine Trennung der Fettfraktion von der Proteinfraktion wird eine Erwärmung der getrockneten Larven auf 60°C vorgenommen. Die Larven werden in einem Extruderverfahren gepresst, wobei im Schneckengang der Presse Temperaturen zwischen 80°C und 100°C eingestellt werden. Zur Aufbereitung der Proteinfraktion wird der proteinreiche Presskuchen mittels einer Hammer- oder Prallmühle zu einem Mehl vermahlen (Insektenmehl). Zur Aufbereitung der Fettfraktion werden die übrigen Anteile bei Raumtemperatur in flüssige und feste Bestandteile durch Sieben getrennt, wobei optional eine Raffinierung bis zu dem gewünschten Trenngrad erfolgen kann (Insektenfett). Der Presskuchen enthält circa 53 % Rohprotein, circa 18 % Kohlenhydrate, circa 15,7 % Rohasche und circa 9,7 % Fett. Obwohl Astaxanthin fettlöslich ist und daher zu einem erheblichen Anteil in der Fettfraktion vorhanden ist, ist ein gewisser Anteil auch in dem Presskuchen vorhanden, da auch der Presskuchen einen gewissen Fettanteil aufweist und da Astaxanthin auch gebunden an Proteine oder Kohlenhydrate vorkommen kann.

Für die Weiterverarbeitung als Futtermittelkomponente kann sowohl das Proteinmehl als auch die Fettfraktion verwendet werden. Für die weitere Verarbeitung kann dieses Material mit herkömmlichen Futtermittelkomponenten bis zur gewünschten Wertstoff- und Nährstoffkonzentration gemischt werden und zu einem pelletierten Futtermittel, beispielsweise mittels Extrusion, weiterverarbeitet werden. Geeignete weitere Komponenten für ein anwendungsfertiges Futtermittel sind beispielsweise Weizen, Weizengluten, Erbsen, Pferdebohnen, Sojakuchen, Sojakonzentrat, Rapsmehl, Guarproteinmehl, Sonnenblumenkuchen, Blutmehl, Bierhefe, Krillmehl, hydrolisiertes Fischprotein, Fischöl, Rapsöl, Vitamine und Minerale wie z. B. Monocalciumphosphat. Derartige Substanzen für ein Futtermittel können beispielsweise als Grundrezeptur verwendet werden, wobei einzelne Komponenten dieser Grundrezeptur durch die erfindungsgemäßen Futtermittelkomponenten, die auf den mit einem Carotinoid angereicherten Insektenlarven basieren (insbesondere Insektenmehl und Insektenfett, s.o.), vollständig oder teilweise ersetzt werden. Insbesondere kann Fischmehl und Fischöl und/oder pflanzliches Öl einer herkömmlichen Grundrezeptur durch das erfindungsgemäße Insektenmehl und/oder die erfindungsgemäße Fettfraktion teilweise oder vollständig ersetzt werden, sodass die resultierende Carotinoid-Konzentration beispielsweise 50 - 100 mg/kg Futtermittel, vorzugsweise 70 - 80 mg/kg, bei dem fertigen Futtermittel beträgt. Allgemein kann beispielsweise bis zu etwa 70 % des Proteinanteils und Fettanteils im Futtermittel durch erfindungsgemäßes Insektenprotein und erfindungsgemäßes Insektenfett ersetzt werden. In 1 kg Trockenmasse des Futtermittels kann beispielsweise 5 - 50 %, z. B. circa 20 %, erfindungsgemäßes Insektenmehl und beispielsweise 5 - 10 %, z. B. circa 7 %, erfindungsgemäßes Insektenfett zugesetzt werden.

Für 1 kg Futtermittel kann beispielsweise insgesamt 262 g (26,2 %) des erfindungsgemäßen Proteinmehls (circa 19 % der Trockenmasse) und der erfindungsgemäßen Fettfraktion (circa 7 % der Trockenmasse), die mit dem oben beschriebenen Verfahren gewonnen wurden, verwendet werden. Eine beispielhafte Zusammensetzung eines als Fischfutter geeigneten erfindungsgemäßen Futtermittels ist nachfolgend aufgelistet:

| **Futtermittelkomponenten** | **Futtermittel % Trockenmasse** |
|---|---|
| Fischmehl (Clupea sp.) | 3,92 |
| Carotinoid angereichertes Insektenmehl | 19,16 |
| Blutmehl | 5,00 |
| Gelatine | 5,00 |
| Erbsenprotein isolate | 14,00 |
| Weizengluten | 10,00 |
| Biolysin | 0,21 |
| Weizenstärke | 13,49 |
| Maisstärke | 9,50 |
| Rapsöl | 1,30 |
| Fisch-Öl | 3,00 |
| Carotinoid angereichertes Insektenfett | 7,00 |
| Vitamin-Mix | 0,50 |
| Mineral-Mix | 0,40 |
| Monocalciumphosphat | 0,50 |
| Fasern (Bentonit/Cellulose/Diamol) | 7,02 |
| **Summe** | **100,00** |

Das mit Astaxanthin angereicherte Futtermittel kann insbesondere an Zuchtfische, wie beispielsweise Lachse, verfüttert werden. In analoger Weise ist beispielsweise die Herstellung eines mit Omega-3-Fettsäuren angereicherten Futtermittels möglich, das vor allem für eine Fütterung von Geflügel, insbesondere von Hühnern und Puten, geeignet ist.

Alternativ kann das erfindungsgemäße Verfahren zur Herstellung eines naturnahen Futtermittels verwendet werden, wobei direkt die Larven und/oder Präpuppen verfüttert werden. Hierfür können die geernteten Larven und/oder Präpuppen beispielsweise durch Einfrieren bei -18°C getötet werden. Alternativ ist beispielsweise eine Tötung durch Sauerstoffentzug in zum Beispiel Stickstoff- oder Kohlendioxid-Atmosphäre möglich. Die im Wesentlichen unverarbeiteten Insektenlarven eignen sich als Frischfutter, beispielsweise für die Kultivierung von Zuchtfischen und in entsprechender Weise auch für Geflügel oder andere Nutztiere.

## Patentansprüche

1. Verfahren zur Herstellung eines mit Astaxanthin angereicherten Futtermittels oder einer mit Astaxanthin angereicherten Futtermittelkomponente, umfassend die folgenden Verfahrensschritte:
- Kultivierung von Mikroorganismen, die Astaxanthin produzieren und/oder anreichern, zur Bereitstellung einer Mikroorganismen-Biomasse,
- Verfüttern der Mikroorganismen-Biomasse an Insektenlarven der Gattung *Hermetia* und Kultivierung der Insektenlarven, und
- Verarbeiten der Insektenlarven zu einem Futtermittel oder einer Futtermittelkomponente.

2. Verfahren nach Anspruch 1, **dadurch gekennzeichnet, dass** die Bereitstellung der Mikroorganismen-Biomasse für die Verfütterung an die Insektenlarven ohne einen technischen Zellaufschluss der Mikroorganismen erfolgt.

3. Verfahren nach Anspruch 1, **dadurch gekennzeichnet, dass** die Bereitstellung der Mikroorganismen-Biomasse für die Verfütterung an die Insektenlarven mit einem teilweisen oder vollständigen technischen Zellaufschluss der Mikroorganismen erfolgt.

4. Verfahren nach einem der vorhergehenden Ansprüche, **dadurch gekennzeichnet, dass** bei der Kultivierung der Mikroorganismen Dauerstadien der Mikroorganismen in vegetative Stadien durch Änderung der Kultivierungsbedingungen überführt werden.

5. Verfahren nach einem der vorhergehenden Ansprüche, **dadurch gekennzeichnet, dass** vor der Bereitstellung der Mikroorganismen-Biomasse die Mikroorganismen durch eine Stressinduktion zur Anregung oder Verstärkung der Produktion und/oder Anreicherung von Astaxanthin konditioniert werden.

6. Verfahren nach einem der vorhergehenden Ansprüche, **dadurch gekennzeichnet, dass** die Insektenlarven Larven von *Hermetia illucens* sind.

7. Verfahren nach einem der vorhergehenden Ansprüche, **dadurch gekennzeichnet, dass** die Mikroorganismen Algen oder Pilze sind.

8. Verfahren nach Anspruch 7, **dadurch gekennzeichnet, dass** die Algen Grünalgen, insbesondere Grünalgen der Gattung *Haematococcus,* vorzugsweise Grünalgen der Art *Haematococcus pluvialis,* sind.

9. Verfahren nach Anspruch 7, **dadurch gekennzeichnet, dass** die Pilze Hefen der Gattung *Phaffia,* vorzugsweise Hefen der Art *Phaffia rhodozyma,* sind.

10. Verfahren nach einem der vorhergehenden Ansprüche, **dadurch gekennzeichnet, dass** bei der Verarbeitung der Insektenlarven eine Trocknung der Insektenlarven erfolgt.

11. Verfahren nach einem der vorhergehenden Ansprüche, **dadurch gekennzeichnet, dass** bei der Verarbeitung der Insektenlarven keine Abtrennung der Fettfraktion von der Proteinfraktion erfolgt.

12. Verfahren nach einem der Ansprüche 1 bis 10, **dadurch gekennzeichnet, dass** bei der Verarbeitung der Insektenlarven eine Abtrennung der Fettfraktion von der Proteinfraktion erfolgt.

13. Verfahren nach einem der vorhergehenden Ansprüche, **dadurch gekennzeichnet, dass** die Insektenlarven zu der Futtermittelkomponente verarbeitet werden, die zusammen mit wenigstens einer weiteren Zutat zu einem Futtermittel verarbeitet wird.

14. Mit Astaxanthin angereichertes Futtermittel oder mit Astaxanthin angereicherte Futtermittelkomponente, herstellbar nach einem Verfahren gemäß einem der Ansprüche 1 bis 13.

## Claims

1. A method for preparing an astaxanthin-enriched feed or an astaxanthin-enriched feed component, comprising the following method steps:
- Cultivation of microorganisms that produce and/or accumulate astaxanthin to provide a microorganism biomass,
- feeding the microorganism biomass to insect larvae of the genus *Hermetia* and cultivating the insect larvae, and
- processing the insect larvae into a feed or a feed component.

2. The method according to claim 1, **characterized in that** the provision of the microorganism biomass for the feeding to the insect larvae is carried out without a technical cell disruption of the microorganisms.

3. The method according to claim 1, **characterized in that** the provision of the microorganism biomass for the feeding to the insect larvae is carried out with a partial or complete technical cell disruption of the microorganisms.

4. The method according to any one of the preceding claims, **characterized in that** during the cultivation of the microorganisms, permanent stages of the microorganisms are converted into vegetative stages by changing the cultivation conditions.

5. The method according to any one of the preceding claims, **characterized in that** prior to providing the microorganism biomass, the microorganisms are conditioned by a stress induction to stimulate or enhance the production and/or accumulation of astaxanthin.

6. The method according to any one of the preceding claims, **characterized in that** the insect larvae are larvae of *Hermetia illucens.*

7. The method according to any one of the preceding claims, **characterized in that** the microorganisms are algae or fungi.

8. The method according to claim 7, **characterized in that** the algae are green algae, in particular green algae of the genus *Haematococcus,* preferably green algae of the species *Haematococcus pluvialis.*

9. The method according to claim 7, **characterized in that** the fungi are yeasts of the genus *Phaffia,* preferably yeasts of the species *Phaffia rhodozyma.*

10. The method according to any one of the preceding claims, **characterized in that** during processing of the insect larvae a drying ot the insect larvae is carried out.

11. The method according to any one of the preceding claims, **characterized in that** the fat fraction is not separated from the protein fraction during processing of the insect larvae.

12. The method according to any one of claims 1 to 10, **characterized in that** the fat fraction is separated from the protein fraction during processing of the insect larvae.

13. The method according to any one of the preceding claims, **characterized in that** the insect larvae are processed into the feed component, which is processed together with at least one further ingredient into a feed.

14. An astaxanthin-enriched feed or an astaxanthin-enriched feed component obtainable by a method according to any one of claims 1 to 13.

## Revendications

1. Procédé de fabrication d'un aliment pour animaux enrichi en astaxanthine ou d'un composant alimentaire pour animaux enrichi en astaxanthine, comprenant les étapes de procédé suivantes :
- culture de microorganismes qui produisent de l'astaxanthine et/ou enrichissent en astaxanthine, pour la préparation d'une biomasse de microorganismes,
- alimentation de larves d'insectes de l'espèce *Hermetia* avec la biomasse de microorganismes et culture des larves d'insectes, et
- traitement des larves d'insectes pour former un aliment pour animaux ou un composant alimentaire pour animaux.

2. Procédé selon la revendication 1, **caractérisé en ce que** la préparation de la biomasse de microorganismes pour l'alimentation des larves d'insectes se produit sans décomposition cellulaire technique des microorganismes.

3. Procédé selon la revendication 1, **caractérisé en ce que** la préparation de la biomasse de microorganismes pour l'alimentation des larves d'insectes se produit avec une décomposition cellulaire technique partielle ou complète des microorganismes.

4. Procédé selon l'une des revendications précédentes, **caractérisé en ce que**, lors de la culture des microorganismes, des formes persistentes des microorganismes sont converties en formes végétatives par modification des conditions de culture.

5. Procédé selon l'une des revendications précédentes, **caractérisé en ce qu'**avant la préparation de la biomasse de microorganismes, les microorganismes sont conditionnés par une induction de stress pour la stimulation ou le renforcement de la production d'astaxanthine et/ou l'enrichissement en astaxanthine.

6. Procédé selon l'une des revendications précédentes, **caractérisé en ce que** les larves d'insectes sont des larves d'*Hermetia illucens.*

7. Procédé selon l'une des revendications précédentes, **caractérisé en ce que** les microorganismes sont des algues ou des champignons.

8. Procédé selon la revendication 7, **caractérisé en ce que** les algues sont des algues vertes, notamment des algues vertes du genre *Haematococcus,* de préférence des algues vertes de l'espèce *Haematococcus pluvialis.*

9. Procédé selon la revendication 7, **caractérisé en ce que** les champignons sont des levures du genre *Phaffia,* de préférence des levures de l'espèce *Phaffia rhodozyma.*

10. Procédé selon l'une des revendications précédentes, **caractérisé en ce qu'**un séchage des larves d'insectes a lieu lors du traitement des larves d'insectes.

11. Procédé selon l'une des revendications précédentes, **caractérisé en ce qu'**il n'y a pas de séparation de la fraction lipidique d'avec la fraction protéique lors du traitement des larves d'insectes.

12. Procédé selon l'une des revendications 1 à 10, **caractérisé en ce qu'**il y a une séparation de la fraction lipidique d'avec la fraction protéique lors du traitement des larves d'insectes.

13. Procédé selon l'une des revendications précédentes, **caractérisé en ce que** les larves d'insectes sont traitées pour former le composant alimentaire pour animaux qui est traité pour former un aliment pour animaux en conjonction avec au moins un ingrédient supplémentaire.

14. Aliment pour animaux enrichi en astaxanthine ou composant alimentaire pour animaux enrichi en astaxanthine, pouvant être fabriqué avec un procédé selon l'une des revendications 1 à 13.
